# EUROPEAN PATENT SPECIFICATION

(11) **EP 3 637 863 B1**
(45) Date of publication and mention of the grant of the patent: **01.09.2021**
(21) Application number: 18872961.0
(22) Date of filing: 04.04.2018
(51) Int. Cl.: H04W 48/14

(54) **ACCESS CONTROL METHOD AND DEVICE, AND COMPUTER-READABLE MEDIUM**
ZUGANGSSTEUERUNGSVERFAHREN UND -VORRICHTUNG SOWIE COMPUTERLESBARES SPEICHERMEDIUM
PROCÉDÉ ET DISPOSITIF DE COMMANDE D'ACCÈS ET SUPPORT LISIBLE PAR ORDINATEUR

(30) Priority: 03.11.2017 WO PCT/CN2017/109407
(43) Date of publication of application: 15.04.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: Manitz Finsterwald Patent- und Rechtsanwaltspartnerschaft mbB
(86) International application number: PCT/CN2018/081980
(87) International publication number: WO 2019/085389

(56) References cited:
- WO-A2-2018/128947
- CN-A- 107 197 486
- CN-A- 107 295 609
- HUAWEI ET AL: "Slice-based Unified Access Control", 3GPP DRAFT; R2-1710220 SLICE-BASED UNIFIED ACCESS CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20171009 - 20171013 29 September 2017 (2017-09-29), XP051354790, Retrieved from the Internet: URL:http://www.3gpp.org/ftp/tsg_ran/WG2_RL 2/TSGR2_99bis/Docs/ [retrieved on 2017-09-29]
- OPPO: "Discussion on Access Control for Network Slicing", 3GPP DRAFT; R2-1801792 DISCUSSION ON ACCESS CONTROL FOR NETWORK SLICING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Athens, Greece; 20180226 - 20180302 13 February 2018 (2018-02-13), XP051398969, Retrieved from the Internet: URL:http://www.3gpp.org/ftp/tsg%5Fran/WG2% 5FRL2/TSGR2%5F101/Docs/ [retrieved on 2018-02-13]
- HUAWEI ET AL: "Access Control in NR for RRC_CONNECTED", 3GPP DRAFT; R2-1709551 ACCESS CONTROL IN NR FOR RRC_CONNECTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051319270, Retrieved from the Internet: URL:http://www.3gpp.org/ftp/Meetings_3GPP_ SYNC/RAN2/Docs/ [retrieved on 2017-08-20]
- ERICSSON: "Access Control and Resource Isolation for Slicing", 3GPP TSG-RAN WG2 #97 R2-1701053, 3 February 2017 (2017-02-03), XP051223023,
- HUAWEI et al.: "Slice-based Unified Access Control", 3GPP TSG-RAN WG2 #99bis R2-1710220, 29 September 2017 (2017-09-29), XP051354790,

## Description

### TECHNICAL FIELD

Embodiments of the disclosure relate to the technical field of wireless communications, and more particularly, to methods and devices for Access Control (AC) and a computer-readable medium.

### BACKGROUND

For avoiding network overloading, an Access Control Barring (ACB) mechanism is introduced into a Long Term Evolution (LTE) system, and in addition, multiple AC mechanisms such as Application specific Congestion Control for Data Communication (ACDC), Extended Access Barring (EAB) and Service-Specific Access Control (SSAC) are also introduced.

Along with development of communication technologies, researches on 5th Generation (5G) have been made. Radio access of 5G is called New Radio (NR). In 5G NR, for avoiding different AC mechanisms from causing increased complexity of system design, it is necessary to design and implement a Unified Access Control (UAC) mechanism. In addition, the concept of network slice is introduced into a 5G system,. Different slices have corresponding slice instances on a Radio Access Network (RAN) side and a Core Network (CN) side, and different slice instances are isolated to a certain extent. Therefore, for avoiding mutual influence between services of different slices, an AC mechanism may be needed to be designed for network slices.

R2-1710220-Slice-based Unified Access Control, discloses the related technology.

### SUMMARY

It is an object of the invention to provide methods, devices and a computer-readable medium, to implement an AC mechanism capable of supporting a network slice. This object is solved by the subject matter of the independent claims.

The technical solutions of the embodiments of the disclosure are implemented as follows.

According to a first aspect of the embodiments of the disclosure, an AC method is provided, as described in any one of claims 1-2.

According to a second aspect of the embodiments of the disclosure, a terminal device is provided, as described in claim 3.

According to a third aspect of the embodiments of the disclosure, an AC method is provided, as described in any one of claims 4-5.

According to a fourth aspect of the embodiments of the disclosure, a network-side device is provided, as described in any one of claims 6-7.

According to a fifth aspect of the embodiments of the disclosure, a computer-readable medium is provided, which may have stored an AC program thereon, the AC program, when being executed by at least one processor comprised in a terminal device or a Radio Access Network, RAN, device, enabling the at least one processor to implement the operations of the method in the first aspect or the third aspect.

The embodiments of the disclosure provide the AC methods, the devices and the computer-readable medium. A terminal device transmits an AC parameter request to a network-side device through dedicated signaling and receives a first AC parameter having a correspondence with a network slice from the network-side device through dedicated signaling. The terminal device also receives a System Information Block(SIB) carrying a second AC parameter from the network-side device, the second AC parameter not having a correspondence with the network slice. Specifically, the network-side device performs differential processing on the first AC parameter and the second AC parameter to obtain a differential parameter, generates acquisition indication information including the differential parameter and differential indication information; and transmits RRC signaling carrying the acquisition indication information to the terminal device. Not only an AC mechanism capable of supporting the network slice is implemented, but also the load of system information broadcast is reduced and resources for signaling transmission is saved.

### BRIEF DESCRIPTION OF DRAWINGS

The figures 2, 3, 4, 8 and 12 are not according to the invention and are present for illustration purposes only.
FIG. 1 is a schematic architecture diagram of an application scenario according to an embodiment of the disclosure.
FIG. 2 is a flowchart of an AC method according to an embodiment of the disclosure.
FIG. 3 is a flowchart of another AC method according to an embodiment of the disclosure.
FIG. 4 is a specific flowchart of an AC method according to an embodiment of the disclosure.
FIG. 5 is a schematic diagram of composition of a network-side device according to an embodiment of the disclosure.
FIG. 6 is a schematic diagram of a specific hardware structure of a network-side device according to an embodiment of the disclosure.
FIG. 7 is a schematic diagram of composition of a terminal device according to an embodiment of the disclosure.
FIG. 8 is a schematic diagram of a specific hardware structure of a terminal device according to an embodiment of the disclosure.
FIG. 9 is a flowchart of yet another AC method according to an embodiment of the disclosure.
FIG. 10 is a schematic diagram of composition of another network-side device according to an embodiment of the disclosure.
FIG. 11 is a schematic diagram of a specific hardware structure of another network-side device according to an embodiment of the disclosure.
FIG. 12 is a flowchart of still another AC method according to an embodiment of the disclosure.
FIG. 13 is a schematic diagram of composition of another terminal device according to an embodiment of the disclosure.
FIG. 14 is a schematic diagram of a specific hardware structure of another terminal device according to an embodiment of the disclosure.

### DETAILED DESCRIPTION

For making the characteristics and technical contents of the embodiments of the disclosure understood in more detail, implementation of the embodiments of the disclosure will be described below in combination with the drawings in detail. The drawings are only adopted for description as references and not intended to limit the embodiments of the appended claims.

The concept of network slice has been proposed in 5G system-related technologies, which substantially refers to that a physical network of a service provider is divided into multiple virtual networks and each virtual network may be divided according to different service requirements and, for example, each virtual network may be divided according to service requirement information including delay, bandwidth, priority, security, reliability and the like, so as to be flexibly adapted to different network application scenarios. Therefore, different network slices (i.e., virtual networks) are isolated from each other to avoid influence of an error or failure of a network slice on normal communication of other network slices.

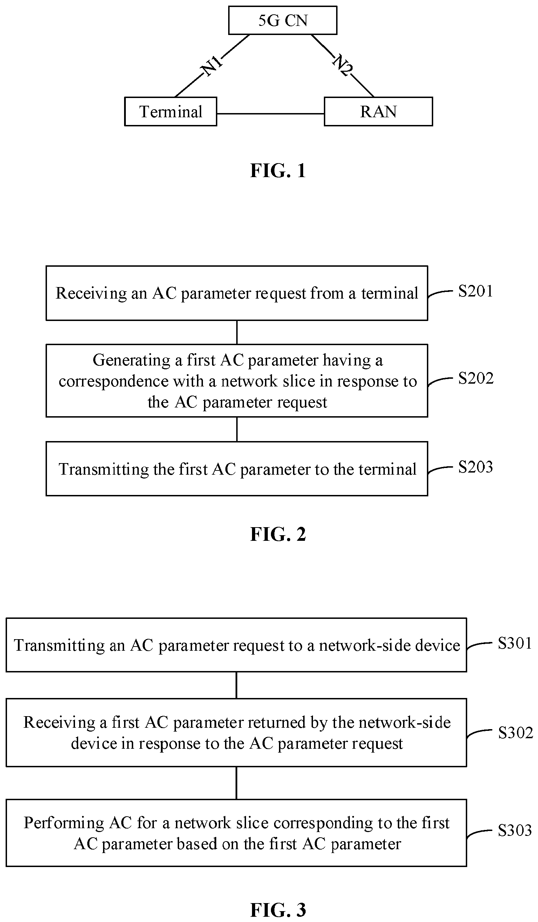

Based on the above description about the network slice, it can be seen that the types of network slices may include: an access network slice, a Core Network (CN) slice and a data network and service slice. Therefore, a network-side device involved in AC for access of a terminal to a network slice may include a RAN device of a 5G system, for example, a gNB, and may also include a CN device of the 5G system, for example, a Core Access and Mobility Management Function (AMF). Therefore, the technical solutions of the embodiments of the disclosure may be atypically applied to a network architecture scenario shown in FIG. 1. In the scenario, the terminal may access a 5G CN through an N2 interface after accessing a RAN, or may be directly connected with the 5G CN through an N1 interface. It is to be noted that N1 is a Non-Access Stratum (NAS) signaling interface between User Equipment (UE) and the AMF, and N2 is an interface between the gNB and the AMF. In addition, in the scenario shown in FIG. 1, the RAN device may include the gNB; the 5G CN device may include the AMF; the terminal may include a cell phone, a smart phone, a Session Initiation Protocol (SIP) phone, a laptop computer, a Personal Digital Assistant (PDA), satellite ratio, a global positioning system, a multimedia device, a video device, a digital audio player (for example, a Moving Picture Experts Group Audio Layer-3 (MP3) player), a camera, a game console, a tablet computer or any other device with a similar function. Meanwhile, the terminal device may also be called, by those skilled in the art, UE, a terminal, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld device, a user agent, a mobile client, a client or some other proper terms.

### Embodiment 1

Based on the elaborations about the network slice and a requirement on AC for access of a terminal to a network slice, a flow of an AC method provided in an embodiment of the disclosure is shown in FIG. 2. The flow may be applied to a network-side device. It may be understood that the network-side device may include a RAN device, for example, a gNB, and may also include a CN device, for example, an AMF. The flow may include the following operations.

In S201, an AC parameter request transmitted by a terminal is received.

In S202, a first AC parameter having a correspondence with a network slice is generated in response to the AC parameter request.

In S203, the first AC parameter is transmitted to the terminal.

It is to be noted that AC parameters are classified according to the technical solution provided in the embodiment of the disclosure. The AC parameter having the correspondence with the network slice is called the first AC parameter, and the AC parameter having no correspondence with the network slice is called a second AC parameter.

In addition, when the network-side device sets the same AC parameter for different network slices, the AC parameter may be notified to the terminal rather than the first AC parameter is transmitted from a network side to UE after the terminal transmits the AC parameter request to the network side.

Since network slices are not supported in an LTE system, all AC parameters in the LTE system may be considered as second AC parameters, and the second AC parameters may be carried in system information and transmitted to a terminal by a base station by broadcasting the system information. Since network slices are supported in a 5G system, a single terminal may support multiple network slices. Since first AC parameters have the correspondence with the network slices, if the first AC parameters are transmitted to the terminal still in the system information broadcast manner in the LTE system, then the base station is required to broadcast multiple AC parameters through system information, and in such case, the base station has two choices: broadcasting the first AC parameter corresponding to one network slice each time, and thus finishing broadcasting all the first AC parameters in several times; or simultaneously broadcasting the first AC parameters corresponding to the multiple network slices respectively. No matter which choice is made, the load of broadcasting system information by the base station may be increased.

Based on the abovementioned problem, it can be seen from the technical solution shown in FIG. 2 that transmitting the first AC parameter to the terminal based on a request of the terminal may reduce the load of system information broadcast of the base station. Moreover, for further reducing the load of system information broadcast of the base station, in a possible implementation of the technical solution shown in FIG. 2, the AC parameter request and the first AC parameter may be carried in NAS signaling or Radio Resource Control (RRC) signaling. Specifically, if the terminal transmits the AC parameter request to the gNB, the AC parameter request and the first AC parameter are carried in the RRC signaling; and if the terminal transmits the AC parameter request to the AMF, the AC parameter and the first AC parameter are carried in the NAS signaling.

In addition, the broadcast manner in the LTE system may still be adopted in the technical solution of the embodiment of the disclosure for the second AC parameter, that is, the gNB broadcasts a System Information Block (SIB) carrying the second AC parameter to the terminal.

For the technical solution shown in FIG. 2, the network slice has the correspondence with the first AC parameter, specifically including two aspects.

The first aspect: information of the network slice may be used to classify the terminal; therefore, the AC parameter provided by the network side may be scaled based on slice information, that is, different network slice information corresponds to different AC parameters.

The second aspect: an AC parameter has a correspondence with an access category and also has a correspondence with an access attempt, therefore, after network slice information is considered, each access attempt may also correspond to different AC parameters due to different slice information. For example, if priority of slice 1 is higher than that of slice 2, an AC parameter corresponding to the slice 1 is different from an AC parameter corresponding to the slice 2 under the access attempt with same signaling or data.

Based on the consideration of the two aspects, it can be seen that different slices correspond to different AC parameters even under the circumstance of the same access category and the same access attempt.

For the technical solution shown in FIG. 2, the first AC parameter may be transmitted to the terminal through two specific implementations, i.e., differential transmission and complete transmission, specifically as follows.

In a possible implementation, the operation that the first AC parameter is transmitted to the terminal may include the following operations.

Differential processing is performed on the first AC parameter and a second AC parameter to obtain a differential parameter.

Acquisition indication information is generated, the acquisition indication information including the differential parameter and differential indication information.

NAS signaling or RRC signaling carrying the acquisition indication information is transmitted to the terminal.

It is to be noted that the terminal, after receiving the NAS signaling or RRC signaling carrying the acquisition indication information, may generate the first AC parameter based on the differential parameter and the second AC parameter according to the differential indication information and then the terminal may execute AC corresponding to the first AC parameter according to the first AC parameter. According to the implementation, the NAS signaling or the RRC signaling only carries the differential parameter and does not carry the complete first AC parameter, so that resource consumption of the network-side device in signaling transmission may be reduced. However, since the terminal is required to regenerate the first AC parameter according to the differential parameter and the second AC parameter after receiving the NAS signaling or the RRC signaling, a processing load of the terminal is increased to a certain extent in this implementation.

In another possible implementation, the operation that the first AC parameter is transmitted to the terminal may include the following operations.

A complete content of the first AC parameter is carried in the NAS signaling or the RRC signaling based on an override manner.

The NAS signaling or RRC signaling carrying the complete content of the first AC parameter is transmitted to the terminal.

It is to be noted that the terminal, after receiving the NAS signaling or RRC signaling carrying the complete content of the first AC parameter, may directly execute AC corresponding to the first AC parameter according to the complete content of the first AC parameter. According to the implementation, the complete content of the first AC parameter is carried in the NAS signaling or the RRC signaling, so that the resource consumption of the network-side device in signaling transmission is increased. However, since the terminal may directly execute AC according to the complete content of the first AC parameter, the processing load of the terminal is reduced to a certain extent in the implementation.

Through the technical solution of the embodiment, the first AC parameter having the correspondence with the network slice is transmitted to the terminal based on the request of the terminal, and the AC parameter request and the first AC parameter are carried through dedicated signaling for sending, so that the load of system information broadcast is reduced on the basis that the AC parameter supports the network slice.

### Embodiment 2

Based on the same inventive concept of the abovementioned embodiment, referring to FIG. 3, a flow of an AC method provided in the embodiment of the disclosure is shown. The flow may be applied to a terminal. The flow may include the following operations.

In S301, an AC parameter request is transmitted to a network-side device.

In S302, a first AC parameter returned by the network-side device in response to the AC parameter request is received, the first AC parameter having a correspondence with a network slice.

In S303, AC is performed, based on the first AC parameter, for the network slice corresponding to the first AC parameter.

It is to be noted that, according to the technical solution provided in the embodiment of the disclosure, AC parameters are classified; the AC parameter having the correspondence with the network slice is called the first AC parameter and the AC parameter having no correspondence with the network slice is called a second AC parameter.

In addition, when the network-side device sets the same AC parameter for different network slices, the terminal may receive a notification message including the AC parameter from the network-side device rather than UE receives the first AC parameter from a network side after transmitting the AC parameter request to the network side.

Based on the descriptions of the abovementioned embodiment, in this embodiment, the AC parameter request and the first AC parameter are carried in NAS signaling or RRC signaling. Specifically, if the terminal transmits the AC parameter request to a gNB, then the AC parameter request and the first AC parameter are carried in the RRC signaling; and if the terminal transmits the AC parameter request to an AMF, then the AC parameter request and the first AC parameter are carried in the NAS signaling.

Based on the descriptions of the abovementioned embodiment, in this embodiment, the flow may further include the following operation.

A SIB which is broadcast by a gNB and carries a second AC parameter is received.

Moreover, based on the descriptions of the abovementioned embodiment, the first AC parameter may be transmitted to the terminal by two ways, i.e., differential transmission and complete transmission, which are specifically as follows.

In a possible implementation, the operation that the first AC parameter returned by the network-side device in response to the AC parameter request is received may include that:
NAS signaling or RRC signaling carrying acquisition indication information is received, the acquisition indication information including a differential parameter of the first AC parameter and the second AC parameter and including differential indication information; and
the first AC parameter is generated based on the differential parameter and the second AC parameter according to the differential indication information.

In another possible implementation, the operation that the first AC parameter returned by the network-side device in response to the AC parameter request is received may include that:
the NAS signaling or RRC signaling carrying a complete content of the first AC parameter is received.

Specific elaborations about the technical solution of the embodiment may refer to the corresponding elaborations of embodiment 1 and elaborations are omitted herein.

### Embodiment 3

This embodiment is not according to the invention and is present for illustration purposes only.

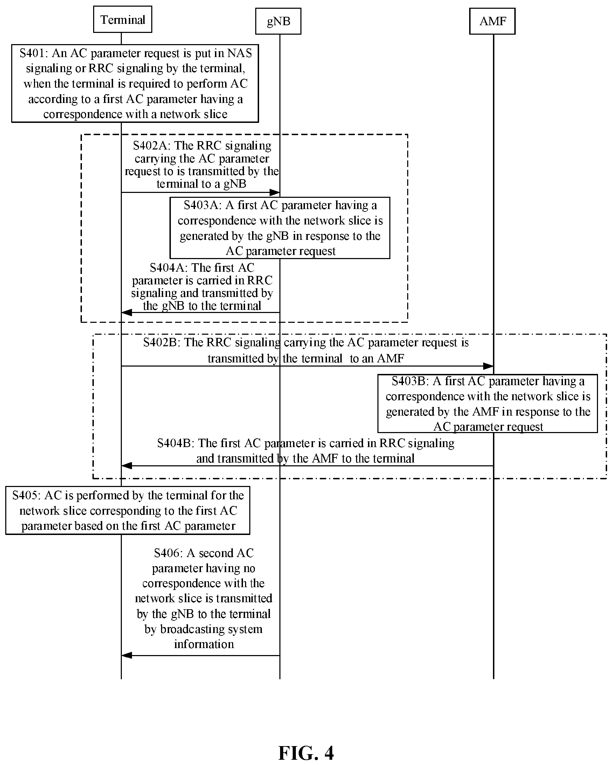

Based on the same inventive concept of the abovementioned embodiments, referring to FIG. 4, a specific flow of an AC method provided in the embodiment of the disclosure is shown. In combination with the technical solutions of the abovementioned embodiments, it may be understood that the technical solution of the embodiment may be applied to the application scenario architecture shown in FIG. 1 and may include the following operations.

In S401, an AC parameter request is put in NAS signaling or RRC signaling by a terminal when the terminal is required to perform AC according to a first AC parameter having a correspondence with a network slice.

It may be understood that, based on the architecture shown in FIG. 1, the terminal may access a RAN and may also directly access a CN device. Therefore, the first AC parameter corresponding to the network slice may be generated by a RAN device, i.e., a gNB, and may also be generated by the CN device, i.e., an AMF. The terminal is required to transmit the AC parameter request to the gNB and the AMF through different dedicated signaling. As an example, the AC parameter request is transmitted to the gNB through the RRC signaling and the AC parameter request is transmitted to the AMF through the NAS signaling, specifically as shown in the dashed boxes and dash-dotted boxes in FIG. 4.

In S402A, the RRC signaling carrying the AC parameter request is transmitted by the terminal to a gNB.

In S403A, the first AC parameter having the correspondence with the network slice is generated by the gNB in response to the AC parameter request.

In S404A, the first AC parameter is carried in RRC signaling and transmitted by the gNB to the terminal.

In S402B, the RRC signaling carrying the AC parameter request is transmitted by the terminal to an AMF.

In S403B, the first AC parameter having the correspondence with the network slice is generated by the AMF in response to the AC parameter request.

In S404B, the first AC parameter is carried in RRC signaling and transmitted by the AMF to the terminal.

In S405, AC is performed by the terminal for the network slice corresponding to the first AC parameter based on the first AC parameter.

For the technical solution shown in FIG. 4, the terminal transmits the AC parameter request to a network-side device through the dedicated signaling and receives the first AC parameter having the correspondence with the network slice from the network-side device through dedicated signaling, so that the load of system information broadcast is reduced on the basis that the AC parameter supports the network slice.

It is to be noted that an AC parameter having no correspondence with the network slice is called a second AC parameter. The technical solution shown in FIG. 4 may further include the following operation.

In S406, a second AC parameter having no correspondence with the network slice is transmitted by the gNB to the terminal by broadcasting system information.

It may be understood that S406 is not needed to be executed after S401 to S405, but that an execution sequence therebetween is not limited. The sequence numbers are only adopted to distinguish transmission processes of the first AC parameter and the second AC parameter and, in specific application, the execution sequence of the operations in FIG. 4 may be determined according to a practical application scenario. Elaborations thereof are omitted in the embodiment.

### Embodiment 4

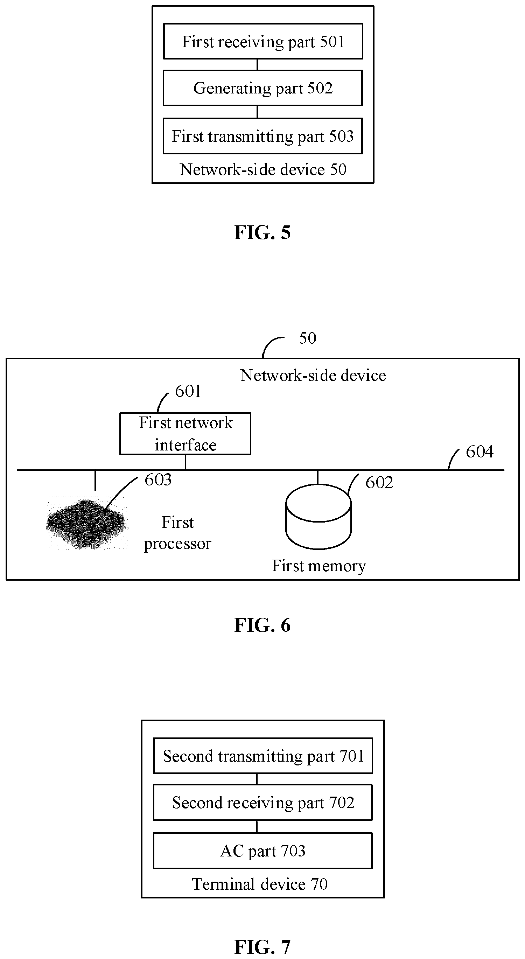

Based on the same inventive concept of the abovementioned embodiments, referring to FIG. 5, a network-side device 50 provided in the embodiment of the disclosure is shown, and may include a first receiving part 501, a generating part 502 and a first transmitting part 503.

The first receiving part 501 is configured to receive an AC parameter request transmitted by a terminal.

The generating part 502 is configured to generate a first AC parameter having a correspondence with a network slice in response to the AC parameter request.

The first transmitting part 503 is configured to transmit the first AC parameter to the terminal.

In a possible implementation, the AC parameter request and the first AC parameter are carried in RRC signaling.

In the implementation, the network-side device is a RAN device, and the AC parameter request and the first AC parameter are carried in the RRC signaling.

The first transmitting part 503 is further configured to:
broadcast a SIB carrying a second AC parameter to the terminal, the second AC parameter having no correspondence with the network slice.

The first transmitting part 503 is configured to:
perform differential processing on the first AC parameter and the second AC parameter to obtain a differential parameter, the second AC parameter having no correspondence with the network slice;
generate acquisition indication information, the acquisition indication information including the differential parameter and differential indication information; and
transmit the NAS signaling or RRC signaling carrying the acquisition indication information to the terminal.

Specifically, the network-side device 50 involved in the embodiment may be a gNB. Elaborations thereof are not detailed in the embodiment.

It may be understood that, in the embodiment, "part" may be part of a circuit, part of a processor, part of a program or software and the like, and may also be a unit, or a module or non-module.

In addition, each component in the embodiment may be integrated into a processing unit, or each unit may exist independently, or two or more than two units may be integrated into a unit. The integrated unit may be implemented as hardware or implemented in form of software function module.

When implemented in form of software function module and sold or used not as an independent product, the integrated unit may be stored in a computer-readable storage medium. Based on such an understanding, the technical solution of the embodiment substantially or partially making contributions to the conventional art or all or part of the technical solution may be embodied in form of software product. The computer software product is stored in a storage medium, including a plurality of instructions enabling a computer device (which may be a personal computer, a server, a network device or the like) or a processor to execute all or part of the operations of the method in the embodiment. The storage medium may include various media capable of storing program codes such as a U disk, a mobile hard disk, a Read Only Memory (ROM), a Random Access Memory (RAM), a magnetic disk or an optical disk.

Therefore, the embodiment provides a computer-readable medium, which has stored an AC program thereon, the AC program when being executed by at least one processor, enabling the at least one processor to implement the operations of the method of embodiment 1.

Based on the network-side device 50 and the computer-readable medium, referring to FIG. 6, a specific hardware structure of the network-side device 50 provided in the embodiment of the disclosure is shown, which may include a first network interface 601, a first memory 602 and a first processor 603. Each component is coupled together through a bus system 604. It may be understood that the bus system 604 is configured to implement connection communication among these components. The bus system 604 may include a data bus and further include a power bus, a control bus and a state signal bus. However, for clear description, various buses in FIG. 6 are marked as the bus system 604. The first network interface 601 is configured to receive and transmit a signal in a process of receiving and transmitting information with another external network element.

The first memory 602 is configured to store a computer program capable of running in the first processor 603.

The first processor 603 is configured to run the computer program to execute the following operations of:
receiving an AC parameter request transmitted by a terminal;
generating a first AC parameter having a correspondence with a network slice in response to the AC parameter request; and
transmitting the first AC parameter to the terminal.

It may be understood that the first memory 602 in the embodiment of the disclosure may be a volatile memory or a nonvolatile memory, or may include both the volatile and nonvolatile memories. The nonvolatile memory may be a ROM, a Programmable ROM (PROM), an Erasable PROM (EPROM), an Electrically EPROM (EEPROM) or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DRRAM). It is to be noted that the first memory 602 of a system and method described in the disclosure is intended to include, but not limited to, memories of these and any other proper types.

The first processor 603 may be an integrated circuit chip with a signal processing capability. In an implementation process, each operation of the method may be completed by an integrated logic circuit of hardware in the first processor 603 or an instruction in a software form. The first processor 603 may be a universal processor, a Digital Signal Processor (DSP), an Application Specific Integrated Circuit (ASIC), a Field Programmable Gate Array (FPGA) or another Programmable Logic Device (PLD), discrete gate or transistor logical device and discrete hardware component. Each method, operation and logical block diagram in the embodiment of the disclosure may be implemented or executed. The universal processor may be a microprocessor or the processor may also be any conventional processor and the like. The operations of the method in combination with the embodiment of the disclosure may be directly embodied to be executed and completed by a hardware decoding processor or executed and completed by a combination of hardware and software modules in the decoding processor. The software module may be located in a mature storage medium in this field such as a RAM, a flash memory, a ROM, a PROM or EEPROM and a register. The storage medium may be located in the first memory 602. The first processor 603 may read information from the first memory 602 and complete the operations of the method in combination with hardware.

It may be understood that these embodiments described in the disclosure may be implemented by hardware, software, firmware, middle-ware, a microcode or any combination thereof. In case of implementation with the hardware, the processing unit may be implemented in one or more ASICs, DSPs, DSP Devices (DSPDs), PLDs, FPGAs, universal processors, controllers, micro-controllers, microprocessors, other electronic units configured to execute the functions in the application or combinations thereof.

In case of implementation with the software, the technology of the disclosure may be implemented through the modules (for example, processes and functions) capable of executing the functions in the disclosure. A software code may be stored in the memory and executed by the processor. The memory may be implemented in the processor or outside the processor.

Specifically, the first processor 603 in the network-side device 50 may be further configured to run the computer program to execute the operations of the method in embodiment 1. Elaborations are omitted herein.

### Embodiment 5

Based on the same inventive concept of the abovementioned embodiments, referring to FIG. 7, composition of a terminal device 70 provided in the embodiment of the disclosure is shown, and may include a second transmitting part 701, a second receiving part 702 and an AC part 703.

The second transmitting part 701 is configured to transmit an AC parameter request to a network-side device.

The second receiving part 702 is configured to receive a first AC parameter returned by the network-side device in response to the AC parameter request, the first AC parameter having a correspondence with a network slice.

The AC part 703 is configured to perform AC for the network slice corresponding to the first AC parameter based on the first AC parameter.

In a possible implementation, the AC parameter request and the first AC parameter are carried in NAS signaling or RRC signaling.

In the implementation, when the network-side device is a RAN device, the AC parameter request and the first AC parameter are carried in the RRC signaling.

When the network-side device is a CN device, the AC parameter request and the first AC parameter are carried in the NAS signaling.

In a possible implementation, when the network-side device sets the same AC parameter for different network slices, the second receiving part 702 may be further configured to:
receive a notification message including the same AC parameter.

In a possible implementation, the second receiving part 702 may be further configured to:
receive a SIB which is broadcast by a gNB and carries a second AC parameter, the second AC parameter having no correspondence with the network slice.

In the implementation, the second receiving part 702 may be configured to:
receive the NAS signaling or RRC signaling carrying acquisition indication information, the acquisition indication information including a differential parameter of the first AC parameter and the second AC parameter and including differential indication information; and
generate the first AC parameter based on the differential parameter and the second AC parameter according to the differential indication information.

In a possible implementation, the second receiving part 702 may be configured to:
receive the NAS signaling or RRC signaling carrying a complete content of the first AC parameter.

In addition, the embodiment provides a computer-readable medium, which has stored an AC program thereon, the AC program, when being executed by at least one processor, enabling the at least one processor to implement the operations of the method of embodiment 2. Specific elaborations about the computer-readable medium refer to the descriptions in embodiment 4 and are omitted herein.

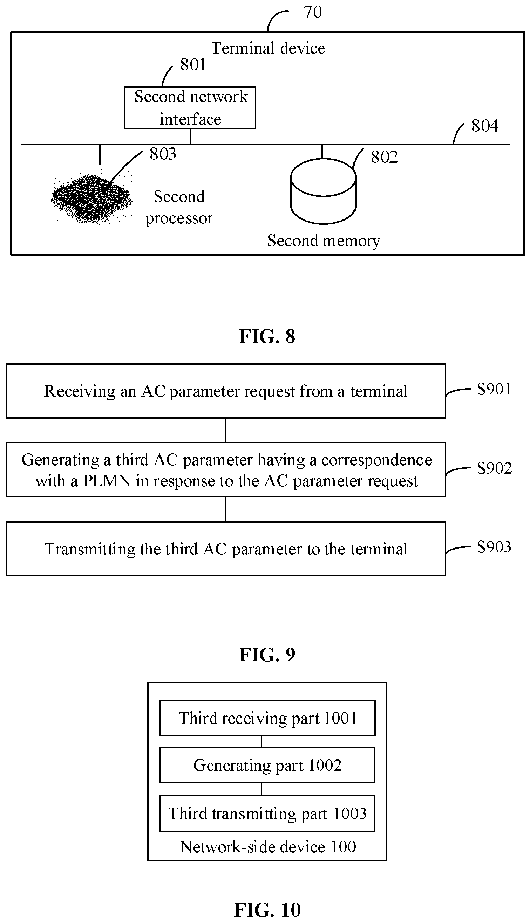

Based on the composition of the terminal device 70 and the computer-readable medium, referring to FIG. 8, a specific hardware structure of the terminal device 70 provided in the embodiment of the disclosure is shown, which may include a second network interface 801, a second memory 802 and a second processor 803. Each component is coupled together through a bus system 804. It may be understood that the bus system 804 is configured to implement connection communication among these components. The bus system 804 may include a data bus and further include a power bus, a control bus and a state signal bus. However, for clear description, various buses in FIG. 8 are marked as the bus system 804.

The second network interface 801 is configured to receive and transmit a signal in a process of receiving and transmitting information with another external network element.

The second memory 802 is configured to store a computer program capable of running in the second processor 803.

The second processor 803 is configured to run the computer program to execute the following operations of:
transmitting an AC parameter request to a network-side device;
receiving a first AC parameter returned by the network-side device in response to the AC parameter request, the first AC parameter having a correspondence with a network slice; and
performing AC for the network slice corresponding to the first AC parameter based on the first AC parameter.

It may be understood that parts in the specific hardware structure of the terminal device 70 in the embodiment are similar to the corresponding parts in embodiment 5 and will not be elaborated herein.

Specifically, the second processor 803 in the terminal device 70 may be further configured to run the computer program to execute the operations of the method in embodiment 2. Elaborations are omitted herein.

Through the technical solutions of embodiment 1 to embodiment 5, it can be seen that, considering that a data volume of AC parameters is relatively large in a practical application, the AC parameters are distinguished according to whether a correspondence with network slices is formed or not in the technical solutions, that is, the AC parameters are classified into per-slice AC parameters and slice common or slice-unrelated AC parameters, i.e., first AC parameters and second AC parameters in the technical solutions respectively, so that the first AC parameter having the correspondence with the network slice is transmitted through the dedicated RRC signaling to reduce a data volume transmitted through the SIB and reduce the load of system information broadcast. Based on the same inventive concept, the AC parameters may also be classified according to whether a correspondence is formed with Public Land Mobile Networks (PLMNs) or not, that is, the AC parameters are classified into per-PLMN AC parameters and PLMN common or PLMN-unrelated AC parameters, so that different classified AC parameters are transmitted respectively to reduce the data volume transmitted through the SIB and reduce the load of the system information broadcast. Based on this, the following embodiments are proposed. Moreover, based on that the PLMN is involved in the above descriptions, for the network-side device involved in the following embodiments, in a specific implementation process, if the network-side device is an RAN device, the network-side device may be an Evolved Node B (eNB) of an LTE system or may also be a 5G base station (gNB). Elaborations thereof are omitted in the embodiment of the disclosure.

### Embodiment 6

This embodiment is not according to the invention and is present for illustration purposes only.

Based on the same inventive concept of the abovementioned embodiments, referring to FIG. 9, an AC method provided in the embodiment of the disclosure is shown. The method may be applied to a network-side device. The method may include the following operations.

In S901, an AC parameter request transmitted by a terminal is received.

In S902, a third AC parameter having a correspondence with a PLMN is generated in response to the AC parameter request.

In S903, the third AC parameter is transmitted to the terminal.

It is to be noted that, in the embodiment, AC parameters are also classified; the AC parameter having the correspondence with the PLMN is called the third AC parameter and the AC parameter having no correspondence with the PLMN is called a fourth AC parameter. That is, the third AC parameter is per-PLMN, and the fourth AC parameter is PLMN-unrelated.

For the technical solution shown in FIG. 9, in a possible implementation, the AC parameter request is carried in NAS or RRC signaling, and the third AC parameter is carried in a first SIB or the RRC signaling.

In addition, for the fourth AC parameter, the method may further include the following operation.

A second SIB carrying a fourth AC parameter is broadcast to the terminal; the fourth AC parameter does not have the correspondence with the PLMN, and the second SIB is different from the first SIB.

It may be understood that transmitting the third AC parameter and the fourth AC parameter through different SIBs may avoid the circumstance that a load of a single SIB is relatively high due to transmission of all the AC parameters through the single SIB and reduce a load of a broadcast channel.

For the technical solution in FIG. 9, when the same AC parameter is set for different PLMNs, the method may further include that: the same AC parameter is notified to the terminal.

It is to be noted that, when the network-side device sets the same AC parameter for different PLMNs, that is, under the circumstance that the AC parameter is common for different PLMNs, i.e., the circumstance that the AC parameter is PLMN common, the AC parameter may be directly notified to the terminal and, specifically, may also be notified through the second SIB.

For the technical solution shown in FIG. 9, the third AC parameter may also be transmitted to the terminal through two ways, i.e., differential transmission and complete transmission, specifically as follows.

In a possible implementation, the operation that the third AC parameter is transmitted to the terminal may include the following operations that:
differential processing is performed on the third AC parameter and the fourth AC parameter to obtain a differential parameter; the fourth AC parameter does not have the correspondence with the PLMN;
acquisition indication information is generated, the acquisition indication information including the differential parameter and differential indication information; and
the first SIB or RRC signaling carrying the acquisition indication information is transmitted to the terminal.

It is to be noted that the terminal, after receiving the first SIB or RRC signaling carrying the acquisition indication information, may generate the third AC parameter based on the differential parameter and the fourth AC parameter according to the differential indication information and then the terminal may execute AC corresponding to the third AC parameter according to the third AC parameter. According to the implementation, the first SIB or the RRC signaling only carries the differential parameter and does not carry the complete third AC parameter, so that resource consumption of the network-side device in signaling transmission may be reduced. However, since the terminal is required to regenerate the third AC parameter according to the differential parameter and the fourth AC parameter after receiving the first SIB or the RRC signaling, a processing load of the terminal is increased to a certain extent in the implementation.

In another possible implementation, the operation that the third AC parameter is transmitted to the terminal may include the following operations that:
a complete content of the third AC parameter is carried in the first SIB or the RRC signaling based on an override manner; and
the first SIB or RRC signaling carrying the complete content of the third AC parameter is transmitted to the terminal.

It is to be noted that the terminal, after receiving the first SIB or RRC signaling carrying the complete content of the third AC parameter, may directly execute AC corresponding to the third AC parameter according to the complete content of the third AC parameter. In the implementation, the complete content of the third AC parameter is carried in the first SIB or the RRC signaling, so that the resource consumption of the network-side device in signaling transmission is increased. However, since the terminal may directly execute corresponding AC according to the complete content of the third AC parameter, the processing load of the terminal is reduced to a certain extent in the implementation.

Through the technical solution of the embodiment, the third AC parameter having the correspondence with the PLMN is transmitted to the terminal based on the request of the terminal, and the AC parameter request and the third AC parameter are carried through dedicated signaling for transmission, so that the load of system information broadcast is reduced.

Based on the technical solution in FIG. 9, referring to FIG. 10, composition of a network-side device 100 provided in the embodiment of the disclosure is shown, and may include a third receiving part 1001, a generating part 1002 and a third transmitting part 1003.

The third receiving part 1001 is configured to receive an AC parameter request transmitted by a terminal.

The generating part 1002 is configured to generate a third AC parameter having a correspondence with a PLMN in response to the AC parameter request.

The third transmitting part 1003 is configured to transmit the third AC parameter to the terminal.

In the solution, the AC parameter request is carried in NAS or RRC signaling, and the third AC parameter is carried in a first SIB or the RRC signaling.

In the solution, the third transmitting part 1003 is further configured to broadcast a second SIB carrying a fourth AC parameter to the terminal, the fourth AC parameter having no correspondence with the PLMN, and the second SIB being different from the first SIB.

In the solution, the third transmitting part 1003 is further configured to, when the same AC parameter is set for different PLMNs, notify the same AC parameter to the terminal.

In the solution, the third transmitting part 1003 is configured to:
perform differential processing on the third AC parameter and the fourth AC parameter to obtain a differential parameter, the fourth AC parameter having no correspondence with the PLMN;
generate acquisition indication information, the acquisition indication information including the differential parameter and differential indication information; and
transmit the first SIB or RRC signaling carrying the acquisition indication information to the terminal.

In the solution, the third transmitting part 1003 is configured to carry a complete content of the third AC parameter in the first SIB or the RRC signaling based on an override manner; and
transmit the first SIB or RRC signaling carrying the complete content of the third AC parameter to the terminal.

In addition, the embodiment provides a computer-readable medium, which has stored an AC program thereon, the AC program when being executed by at least one processor, enabling the at least one processor to implement the operations of the method shown in FIG. 9. Specific elaborations about the computer-readable medium refer to the descriptions in embodiment 4 and are omitted herein.

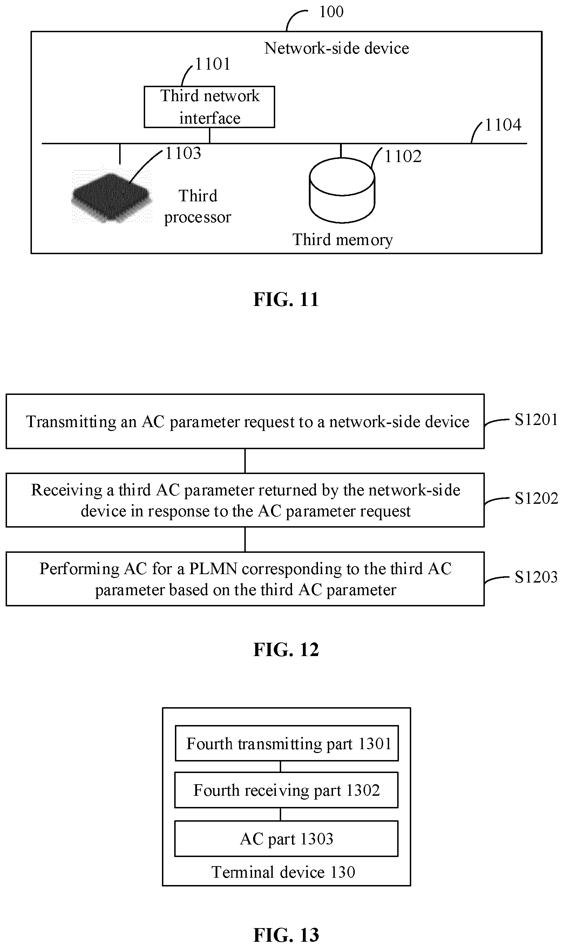

Based on the network-side device 100 and the computer-readable medium, referring to FIG. 11, a specific hardware structure of the network-side device 100 provided in the embodiment of the disclosure is shown, which may include a third network interface 1101, a third memory 1102 and a third processor 1103. Each component is coupled together through a bus system 1104. It may be understood that the bus system 1104 is configured to implement connection communication among these components. The bus system 1104 may include a data bus and further include a power bus, a control bus and a state signal bus. However, for clear description, various buses in FIG. 11 are marked as the bus system 1104. The third network interface 1101 is configured to receive and transmit a signal in a process of receiving and transmitting information with another external network element.

The third memory 1102 is configured to store a computer program capable of running in the third processor 1103.

The third processor 1103 is configured to run the computer program to execute the following operations of:
receiving an AC parameter request transmitted by a terminal;
generating a third AC parameter having a correspondence with a PLMN in response to the AC parameter request; and
transmitting the third AC parameter to the terminal.

It may be understood that parts in the specific hardware structure of the network-side device 100 in the embodiment are similar to the corresponding parts in embodiment 4 and will not be elaborated herein.

Specifically, the third processor 1103 in the network-side device 100 is further configured to run the computer program to execute the operations of the method shown in FIG. 9. Elaborations are omitted herein.

### Embodiment 7

This embodiment is not according to the invention and is present for illustration purposes only.

Based on the same inventive concept of the abovementioned embodiment, referring to FIG. 12, a flow of an AC method provided in the embodiment of the disclosure is shown. The flow may be applied to a terminal. The flow may include the following operations.

In S1201, an AC parameter request is transmitted to a network-side device.

In S1202, a third AC parameter returned by the network-side device in response to the AC parameter request is received, the third AC parameter having a correspondence with a PLMN

In S1203, AC is performed for the PLMN corresponding to the third AC parameter based on the third AC parameter.

It is to be noted that, in the embodiment, AC parameters are classified; the AC parameter having the correspondence with the PLMN is called the third AC parameter and the AC parameter having no correspondence with the PLMN is called a fourth AC parameter. That is, the third AC parameter is per-PLMN, and the fourth AC parameter is PLMN-unrelated.

For the technical solution shown in FIG. 12, in a possible implementation, the AC parameter request is carried in NAS signaling or RRC signaling, and the third AC parameter is carried in a first SIB or the RRC signaling.

In addition, for the fourth AC parameter, the method may further include that: a second SIB which is broadcast by the network-side device and carries a fourth AC parameter is received, the fourth AC parameter having no correspondence with the PLMN, and the second SIB being different from the first SIB.

It may be understood that transmitting the third AC parameter and the fourth AC parameter through different SIBs may avoid the circumstance that a load of a single SIB is relatively high due to transmission of all the AC parameters through the single SIB and reduce a load of a broadcast channel.

For the technical solution in FIG. 12, when the network-side device sets the same AC parameter for different PLMNs, the method may further include that: a notification message including the same AC parameter is received.

It is to be noted that, when the network-side device sets the same AC parameter for different PLMNs, that is, under the circumstance that the AC parameter is common for different PLMNs, i.e., the circumstance that the AC parameter is PLMN common, the notification message including the AC parameter may be directly received, and the AC parameter may also be specifically received through the second SIB.

Moreover, based on the descriptions of the abovementioned embodiment, the third AC parameter may be transmitted to the terminal through two ways, i.e., differential transmission and complete transmission, specifically as follows.

In a possible implementation, the operation that the third AC parameter returned by the network-side device in response to the AC parameter request is received may include the following operations that:
the first SIB or RRC signaling carrying acquisition indication information is received, the acquisition indication information including a differential parameter of the third AC parameter and the fourth AC parameter and including differential indication information; and
the third AC parameter is generated based on the differential parameter and the fourth AC parameter according to the differential indication information.

In a possible implementation, the operation that the third AC parameter returned by the network-side device in response to the AC parameter request is received may include the following operation that:
the first SIB or RRC signaling carrying a complete content of the third AC parameter is received.

Specific elaborations about the technical solution of the embodiment may refer to the corresponding elaborations of embodiment 6 and elaborations are omitted herein.

Based on the technical solution in FIG. 12, referring to FIG. 13,composition of a terminal device 130 provided in the embodiment of the disclosure is shown, and may include a fourth transmitting part 1301, a fourth receiving part 1302 and an AC part 1303.

The fourth transmitting part 1301 is configured to transmit an AC parameter request to a network-side device.

The fourth receiving part 1302 is configured to receive a third AC parameter returned by the network-side device in response to the AC parameter request, the third AC parameter having a correspondence with a PLMN

The AC part 1303 is configured to perform AC for the PLMN corresponding to the third AC parameter based on the third AC parameter.

In the solution, the AC parameter request is carried in NAS signaling or RRC signaling, and the third AC parameter is carried in a first SIB or the RRC signaling.

In the solution, the fourth receiving part 1302 is further configured to, when the network-side device sets the same AC parameter for different PLMNs , receive a notification message including the same AC parameter.

In the solution, the fourth receiving part 1302 is further configured to receive a second SIB broadcast by the network-side device and carrying a fourth AC parameter, the fourth AC parameter having no correspondence with the PLMNand the second SIB being different from the first SIB.

In the solution, the fourth receiving part 1302 is configured to:
receive the first SIB or RRC signaling carrying acquisition indication information, the acquisition indication information including a differential parameter of the third AC parameter and the fourth AC parameter and differential indication information; and
generate the third AC parameter based on the differential parameter and the fourth AC parameter according to the differential indication information.

In the solution, the fourth receiving part 1302 is configured to receive the first SIB or RRC signaling carrying a complete content of the third AC parameter.

In addition, the embodiment provides a computer-readable medium, which has stored an AC program thereon, the AC program, when being executed by at least one processor, enabling the at least one processor to implement the operations of the method shown in FIG. 12. Specific elaborations about the computer-readable medium refer to the descriptions in embodiment 4 and are omitted herein.

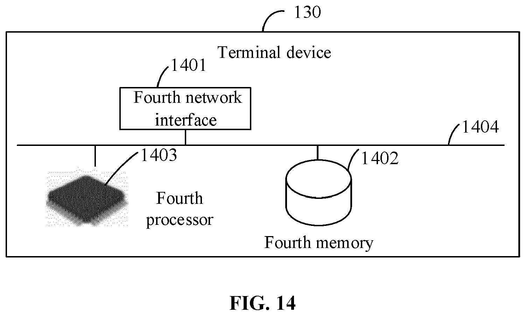

Based on the terminal device 130 and the computer-readable medium, referring to FIG. 14, a specific hardware structure of the terminal device 130 provided in the embodiment of the disclosure is shown, which may include a fourth network interface 1401, a fourth memory 1402 and a fourth processor 1403. Each component is coupled together through a bus system 1404. It may be understood that the bus system 1404 is configured to implement connection communication between these components. The bus system 1404 includes a data bus and further includes a power bus, a control bus and a state signal bus. However, for clear description, various buses in FIG. 14 are marked as the bus system 1404.

The fourth network interface 1401 is configured to receive and transmit a signal in a process of receiving and transmitting information with another external network element.

The fourth memory 1402 is configured to store a computer program capable of running in the fourth processor 1403.

The fourth processor 1403 is configured to run the computer program to execute the following operations.

An AC parameter request is transmitted to a network-side device.

A third AC parameter returned by the network-side device in response to the AC parameter request is received, the third AC parameter having a correspondence with a PLMN

AC is performed for the PLMN corresponding to the third AC parameter based on the third AC parameter.

It may be understood that parts in the specific hardware structure of the terminal device 130 in the embodiment are similar to the corresponding parts in embodiment 4 and will not be elaborated herein.

Specifically, the fourth processor 1403 in the terminal device 130 is further configured to run the computer program to execute the operations of the method shown in FIG. 12. Elaborations are omitted herein.

The above is only the preferred embodiment of the disclosure and not intended to limit the scope of protection of the disclosure.

### INDUSTRIAL APPLICABILITY

In the embodiments of the disclosure, a first AC parameter having a correspondence with a network slice is sent transmitted to a terminal based on a request of the terminal, and an AC parameter request and the first AC parameter are carried through dedicated signaling for transmission, so that the load of system information broadcast is reduced on the basis that the AC parameter supports the network slice.

## Claims

1. An Access Control, AC, method, performed by a terminal device, comprising:
transmitting (S301) an AC parameter request to a network-side device, the network side-device comprising a Radio Access Network, RAN, device or a Core Network, CN, device;
receiving (S302) a first AC parameter returned by the network-side device in response to the AC parameter request, wherein the first AC parameter has a correspondence with a network slice; and
performing (S303) AC for the network slice corresponding to the first AC parameter based on the first AC parameter;
**characterized in that**,
the method further comprises:
receiving a System Information Block, SIB, from the Radio Access Network, RAN, device in a broadcast manner carrying a second AC parameter, wherein the second AC parameter does not have a correspondence with the network slice;
wherein, receiving the first AC parameter returned by the network-side device in response to the AC parameter request comprises:
receiving NAS signaling or RRC signaling carrying acquisition indication information, wherein the acquisition indication information comprises a differential parameter of the first AC parameter and the second AC parameter and comprises differential indication information; and
generating the first AC parameter based on the differential parameter and the second AC parameter according to the differential indication information.

2. The method of claim 1, wherein the AC parameter request and the first AC parameter are carried in Non-Access Stratum, NAS, signaling or Radio Resource Control, RRC, signaling;
when the network-side device is the Radio Access Network, RAN, device, the AC parameter request and the first AC parameter are carried in the RRC signaling; or
when the network-side device is the Core Network, CN, device, the AC parameter request and the first AC parameter are carried in the NAS signaling.

3. A terminal device (70), comprising a second transmitting part (701), a second receiving part (702) and an Access Control, AC, part (703), wherein
the second transmitting part (701) is configured to transmit an AC parameter request to a network-side device, the network side-device comprising a Radio Access Network, RAN, device or a Core Network, CN, device;
the second receiving part (702) is configured to receive a first AC parameter returned by the network-side device in response to the AC parameter request, wherein the first AC parameter has a correspondence with a network slice; and
the AC part (703) is configured to perform AC for the network slice corresponding to the first AC parameter based on the first AC parameter;
wherein the second receiving part (702) is further configured to:
receive a System Information Block, SIB, from the Radio Access Network, RAN, device in a broadcast manner carrying a second AC parameter, wherein the second AC parameter does not have a correspondence with the network slice;
receive NAS signaling or RRC signaling carrying acquisition indication information, wherein the acquisition indication information comprises a differential parameter of the first AC parameter and the second AC parameter and comprises differential indication information; and
generate the first AC parameter based on the differential parameter and the second AC parameter according to the differential indication information.

4. An Access Control, AC, method, performed by a Radio Access Network, RAN, device, the method comprising:
receiving (S201) an AC parameter request from a terminal;
generating (S202) a first AC parameter having a correspondence with a network slice in response to the AC parameter request; and
transmitting (S203) the first AC parameter to the terminal;
**characterized in that**,
the method further comprises:
broadcasting a System Information Block, SIB, carrying a second AC parameter to the terminal, wherein the second AC parameter does not have a correspondence with the network slice; and
wherein transmitting the first AC parameter to the terminal comprises:
performing differential processing on the first AC parameter and the second AC parameter to obtain a differential parameter, wherein the second AC parameter does not have a correspondence with the network slice;
generating acquisition indication information, wherein the acquisition indication information comprises the differential parameter and differential indication information; and
transmitting RRC signaling carrying the acquisition indication information to the terminal.

5. The method of claim 4, wherein the AC parameter request and the first AC parameter are carried in Radio Resource Control, RRC, signaling.

6. A Radio Access Network, RAN, device, comprising a first receiving part (501), a generating part (502) and a first transmitting part (503), wherein
the first receiving part (501) is configured to receive an Access Control, AC, parameter request from a terminal;
the generating part (502) is configured to generate a first AC parameter having a correspondence with a network slice in response to the AC parameter request; and
the first transmitting part (503) is configured to transmit the first AC parameter to the terminal;
wherein the first transmitting part (503) is further configured to:
broadcast a System Information Block, SIB, carrying a second AC parameter to the terminal, wherein the second AC parameter does not have a correspondence with the network slice;
perform differential processing on the first AC parameter and the second AC parameter to obtain a differential parameter, wherein the second AC parameter does not have a correspondence with the network slice;
generate acquisition indication information, wherein the acquisition indication information comprises the differential parameter and differential indication information; and
transmit RRC signaling carrying the acquisition indication information to the terminal.

7. The network-side device of claim 6, wherein the AC parameter request and the first AC parameter are carried in Radio Resource Control, RRC, signaling.

8. A computer-readable medium, having stored an Access Control, AC, program thereon, the AC program, when being executed by at least one processor comprised in a terminal device or a Radio Access Network, RAN, device, enabling the at least one processor to implement the operations of the method of any one of claims 1-2 or the method of any one of claims 4-5, respectively.

## Patentansprüche

1. Verfahren zur Zugriffssteuerung (AC), das durch ein Endgerät durchgeführt wird und Folgendes umfasst:
Übertragen (S301) einer AC-Parameteranforderung an eine netzwerkseitige Vorrichtung, wobei die netzwerkseitige Vorrichtung eine Funkzugangsnetz-(RAN)-Vorrichtung oder eine Kernnetzwerk-(CN)-Vorrichtung aufweist;
Empfangen (S302) eines ersten AC-Parameters, der von der netzwerkseitigen Vorrichtung als Antwort auf die AC-Parameteranforderung zurückgegeben wird, wobei der erste AC-Parameter einer Netzwerkscheibe entspricht; und
Durchführen (S303) einer Zugriffssteuerung (AC) für die Netzwerkscheibe, die dem ersten AC-Parameter entspricht, basierend auf dem ersten AC-Parameter;
**dadurch gekennzeichnet, dass** das Verfahren ferner Folgendes umfasst:
Empfangen, in einer Broadcast-Weise, von der Funkzugangsnetz-(RAN)-Vorrichtung, eines Systeminformationsblocks (SIB), der einen zweiten AC-Parameter trägt, wobei der zweite AC-Parameter keine Entsprechung mit der Netzwerkscheibe hat;
wobei das Empfangen des ersten AC-Parameters, der von der netzwerkseitigen Vorrichtung als Antwort auf die AC-Parameteranforderung zurückgegeben wird, Folgendes umfasst:
Empfangen von NAS-Signalisierung oder RRC-Signalisierung, die Erfassungsanzeigeinformationen überträgt, wobei die Erfassungsanzeigeinformationen einen Differenzparameter des ersten AC-Parameters und des zweiten AC-Parameters aufweisen und Differenzanzeigeinformationen umfassen; und
Erzeugen des ersten AC-Parameters, basierend auf dem Differenzparameter, und des zweiten AC-Parameters gemäß den Differenzanzeigeinformationen.

2. Verfahren nach Anspruch 1, wobei die AC-Parameteranforderung und der erste AC-Parameter in der Nicht-Zugriffsschicht-(NAS)-Signalisierung oder der Funkressourcensteuerungs-(RRC)-Signalisierung übertragen werden;
wenn die netzwerkseitige Vorrichtung die Funkzugangsnetz-(RAN)-Vorrichtung ist, werden die AC-Parameteranforderung und der erste AC-Parameter in der RRC-Signalisierung übertragen; oder
wenn die netzwerkseitige Vorrichtung die Kernnetzwerk-(CN)-Vorrichtung ist, werden die AC-Parameteranforderung und der erste AC-Parameter in der NAS-Signalisierung übertragen.

3. Endgerät (70), das einen zweiten Sendeteil (701), einen zweiten Empfangsteil (702) und einen Teil für Zugriffssteuerung (AC) (703) aufweist, wobei
der zweite Sendeteil (701) dazu ausgebildet ist, eine AC-Parameteranforderung an eine netzwerkseitige Vorrichtung zu übertragen, wobei die netzwerkseitige Vorrichtung eine Funkzugangsnetz-(RAN)-Vorrichtung oder eine Kernnetzwerk-(CN)-Vorrichtung aufweist;
der zweite Empfangsteil (702) dazu ausgebildet ist, einen ersten AC-Parameter zu empfangen, der von der netzwerkseitigen Vorrichtung als Antwort auf die AC-Parameteranforderung zurückgegeben wird, wobei der erste AC-Parameter eine Entsprechung mit einer Netzwerkscheibe hat; und
der AC-Teil (703) ausgebildet ist, um, basierend auf dem ersten AC-Parameter, eine Zugriffssteuerung (AC) für die dem ersten AC-Parameter entsprechende Netzwerkscheibe durchzuführen;
wobei der zweite Empfangsteil (702) ferner für Folgendes ausgebildet ist:
Empfangen, in einer Broadcast-Weise, von der Funkzugangsnetz-(RAN)-Vorrichtung, eines Systeminformationsblocks (SIB), der einen zweiten AC-Parameter überträgt, wobei der zweite AC-Parameter keine Entsprechung mit der Netzwerkscheibe hat;
Empfangen von NAS-Signalisierung oder RRC-Signalisierung, die Erfassungsanzeigeinformationen überträgt, wobei die Erfassungsanzeigeinformationen einen Differenzparameter des ersten AC-Parameters und des zweiten AC-Parameters aufweisen und Differenzanzeigeinformationen umfassen; und
Erzeugen des ersten AC-Parameters, basierend auf dem Differenzparameter, und des zweiten AC-Parameters gemäß den Differenzanzeigeinformationen.

4. Verfahren für Zugriffssteuerung (AC), das von einer Funkzugangsnetz-(RAN)-Vorrichtung durchgeführt wird, wobei das Verfahren Folgendes umfasst:
Empfangen (S201) einer AC-Parameteranforderung von einem Endgerät;
Erzeugen (S202) eines ersten AC-Parameters, der eine Entsprechung mit einer Netzwerkscheibe hat, als Antwort auf die AC-Parameteranforderung; und
Übertragen (S203) des ersten AC-Parameters an das Endgerät;
**dadurch gekennzeichnet, dass** das Verfahren ferner Folgendes umfasst:
Senden eines Systeminformationsblocks (SIB), der einen zweiten AC-Parameter trägt, an das Endgerät, wobei der zweite AC-Parameter keine Entsprechung mit der Netzwerkscheibe hat; und
wobei das Übertragen des ersten AC-Parameters an das Endgerät Folgendes umfasst:
Durchführen einer Differenzverarbeitung an dem ersten AC-Parameter und dem zweiten AC-Parameter, um einen Differenzparameter zu erhalten, wobei der zweite AC-Parameter keine Entsprechung mit der Netzwerkscheibe hat;
Erzeugen von Erfassungsanzeigeinformationen, wobei die Erfassungsanzeigeinformationen den Differenzparameter und die Differenzanzeigeinformationen aufweisen; und
Übertragen der RRC-Signalisierung, die die Erfassungsanzeigeinformationen trägt, an das Endgerät.

5. Verfahren nach Anspruch 4, wobei die AC-Parameteranforderung und der erste AC-Parameter in der Funkressourcensteuerungs-(RRC)-Signalisierung übertragen werden.

6. Funkzugangsnetz-(RAN)-Vorrichtung, die einen ersten Empfangsteil (501), einen Erzeugungsteil (502) und einen ersten Sendeteil (503) umfasst, wobei
der erste Empfangsteil (501) dazu ausgebildet ist, eine Zugriffssteuerungs-(AC)-Parameteranforderung von einem Endgerät zu empfangen;
der Erzeugungsteil (502) dazu ausgebildet ist, als Antwort auf die AC-Parameteranforderung einen ersten AC-Parameter zu erzeugen, der eine Entsprechung mit einer Netzwerkscheibe hat; und
der erste Sendeteil (503) dazu ausgebildet ist, den ersten AC-Parameter an das Endgerät zu übertragen;
wobei der erste Sendeteil (503) ferner für Folgendes ausgebildet ist:
Senden eines Systeminformationsblocks (SIB), der einen zweiten AC-Parameter trägt, an das Endgerät, wobei der zweite AC-Parameter keine Entsprechung mit der Netzwerkscheibe hat;
Durchführen einer Differenzverarbeitung an dem ersten AC-Parameter und dem zweiten AC-Parameter, um einen Differenzparameter zu erhalten, wobei der zweite AC-Parameter keine Entsprechung mit der Netzwerkscheibe hat;
Erzeugen von Erfassungsanzeigeinformationen, wobei die Erfassungsanzeigeinformationen den Differenzparameter und die Differenzanzeigeinformationen aufweisen; und
Übertragen der RRC-Signalisierung, die die Erfassungsanzeigeinformationen trägt, an das Endgerät.

7. Netzwerkseitige Vorrichtung nach Anspruch 6, wobei die AC-Parameteranforderung und der erste AC-Parameter in der Funkressourcensteuerungs-(RRC)-Signalisierung übertragen werden.

8. Computerlesbares Medium, auf dem ein Programm für Zugriffssteuerung (AC) gespeichert ist, wobei das AC-Programm, wenn es von mindestens einem Prozessor ausgeführt wird, der in einem Endgerät oder einer Funkzugangsnetz-(RAN)-Vorrichtung enthalten ist, den mindestens einen Prozessor befähigt, die Operationen des Verfahrens nach einem der Ansprüche 1-2 bzw. des Verfahrens nach einem der Ansprüche 4-5 zu implementieren.

## Revendications

1. Procédé de contrôle d'accès (AC) réalisé par un dispositif terminal, comprenant les étapes consistant à :
émettre (S301) une demande de paramètre AC vers un dispositif côté réseau, le dispositif côté réseau comprenant un dispositif de réseau d'accès radio (RAN) ou un dispositif de réseau central (CN) ;
recevoir (S302) un premier paramètre AC renvoyé par le dispositif côté réseau en réponse à la demande de paramètre AC, le premier paramètre AC ayant une correspondance avec une tranche de réseau ; et
réaliser (S303) un AC pour la tranche de réseau qui correspond au premier paramètre AC sur la base du premier paramètre AC ;
le procédé étant **caractérisé en ce qu'**il comprend en outre l'étape consistant à :
recevoir, par diffusion en provenance du dispositif de réseau d'accès radio (RAN), un bloc d'informations de système (SIB) qui transporte un second paramètre AC, le second paramètre AC n'ayant pas de correspondance avec la tranche de réseau ;
la réception du premier paramètre AC renvoyé par le dispositif côté réseau en réponse à la demande de paramètre AC comprenant les étapes consistant à :
recevoir une signalisation NAS ou une signalisation RRC qui transporte une information d'indication d'acquisition, l'information d'indication d'acquisition comprenant un paramètre différentiel du premier paramètre AC et du second paramètre AC et comprenant une information d'indication différentielle ; et
générer le premier paramètre AC sur la base du paramètre différentiel et le second paramètre AC selon l'information d'indication différentielle.

2. Procédé selon la revendication 1, dans lequel la demande de paramètre AC et le premier paramètre AC sont transportés dans une signalisation de strate sans accès (NAS) ou dans une signalisation de contrôle des ressources radio (RRC) ;
quand le dispositif côté réseau est le dispositif de réseau d'accès radio (RAN), la demande de paramètre AC et le premier paramètre AC sont transportés dans la signalisation RRC ; ou
quand le dispositif côté réseau est le dispositif de réseau central (CN), la demande de paramètre AC et le premier paramètre AC sont transportés dans la signalisation NAS.

3. Dispositif terminal (70), comprenant une seconde partie d'émission (701), une seconde partie de réception (702) et une partie de contrôle d'accès (AC) (703),
la seconde partie d'émission (701) étant configurée pour émettre une demande de paramètre AC vers un dispositif côté réseau, le dispositif côté réseau comprenant un dispositif de réseau d'accès radio (RAN) ou un dispositif de réseau central (CN) ;
la seconde partie de réception (702) étant configurée pour recevoir un premier paramètre AC renvoyé par le dispositif côté réseau en réponse à la demande de paramètre AC, le premier paramètre AC ayant une correspondance avec une tranche de réseau ; et
la partie AC (703) étant configurée pour réaliser un AC pour la tranche de réseau qui correspond au premier paramètre AC sur la base du premier paramètre AC ;
la seconde partie de réception (702) étant en outre configurée pour :
recevoir, par diffusion en provenance du dispositif de réseau d'accès radio (RAN), un bloc d'informations de système (SIB) qui transporte un second paramètre AC, le second paramètre AC n'ayant pas de correspondance avec la tranche de réseau ;
recevoir une signalisation NAS ou une signalisation RRC qui transporte une information d'indication d'acquisition, l'information d'indication d'acquisition comprenant un paramètre différentiel du premier paramètre AC et du second paramètre AC et comprenant une information d'indication différentielle ; et
générer le premier paramètre AC sur la base du paramètre différentiel et le second paramètre AC selon l'information d'indication différentielle.

4. Procédé de contrôle d'accès (AC) réalisé par un dispositif de réseau d'accès radio (RAN), le procédé comprenant les étapes consistant à :
recevoir (S201) une demande de paramètre AC en provenance d'un terminal ;
générer (S202) un premier paramètre AC qui a une correspondance avec une tranche de réseau en réponse à la demande de paramètre AC ; et
émettre (S203) le premier paramètre AC vers le terminal ;
le procédé étant **caractérisé en ce qu'**il comprend en outre l'étape consistant à :
diffuser vers le terminal un bloc d'informations de système (SIB) qui transporte un second paramètre AC, le second paramètre AC n'ayant pas de correspondance avec la tranche de réseau ; et
la transmission du premier paramètre AC au terminal comprenant les étapes consistant à :
réaliser un traitement différentiel sur le premier paramètre AC et le second paramètre AC pour obtenir un paramètre différentiel, le second paramètre AC n'ayant pas de correspondance avec la tranche de réseau ;
générer une information d'indication d'acquisition, l'information d'indication d'acquisition comprenant le paramètre différentiel et une information d'indication différentielle ; et
émettre vers le terminal une signalisation RRC qui transporte l'information d'indication d'acquisition.

5. Procédé selon la revendication 4, dans lequel la demande de paramètre AC et le premier paramètre AC sont transportés dans une signalisation de contrôle des ressources radio (RRC).

6. Dispositif de réseau d'accès radio (RAN) comprenant une première partie de réception (501), une partie de génération (502) et une première partie d'émission (503),
la première partie de réception (501) étant configurée pour recevoir une demande de paramètre de contrôle d'accès (AC) en provenance d'un terminal ;
la partie de génération (502) étant configurée pour générer un premier paramètre AC qui a une correspondance avec une tranche de réseau en réponse à la demande de paramètre AC ; et
la première partie d'émission (503) étant configurée pour émettre le premier paramètre AC vers le terminal ;
la première partie d'émission (503) étant en outre configurée pour :
diffuser vers le terminal un bloc d'informations de système (SIB) qui transporte un second paramètre AC, le second paramètre AC n'ayant pas de correspondance avec la tranche de réseau ;
réaliser un traitement différentiel sur le premier paramètre AC et le second paramètre AC pour obtenir un paramètre différentiel, le second paramètre AC n'ayant pas de correspondance avec la tranche de réseau ;
générer une information d'indication d'acquisition, l'information d'indication d'acquisition comprenant le paramètre différentiel et une information d'indication différentielle ; et
émettre vers le terminal une signalisation RRC qui transporte l'information d'indication d'acquisition.

7. Dispositif côté réseau selon la revendication 6, dans lequel la demande de paramètre AC et le premier paramètre AC sont transportés dans une signalisation de contrôle des ressources radio (RRC).

8. Support lisible par ordinateur, sur lequel est stocké un programme de contrôle d'accès (AC), le programme AC, lorsqu'il est exécuté par au moins un processeur compris dans un dispositif terminal ou un dispositif de réseau d'accès radio (RAN), permettant à l'au moins un processeur de mettre en œuvre respectivement les opérations du procédé selon l'une quelconque des revendications 1 et 2 ou du procédé selon l'une quelconque des revendications 4 et 5.
